Europäisches Patentamt

European Patent Office

Office européen des brevets

(19)

(11) Publication number: **0 358 320 B1**

(12) **EUROPEAN PATENT SPECIFICATION**

(45) Date of publication of patent specification: **12.01.94**   (51) Int. Cl.5: **G01P 3/42**

(21) Application number: **89307604.2**

(22) Date of filing: **25.07.89**

(54) **Rotation sensor.**

(30) Priority: **29.07.88 GB 8818136**

(43) Date of publication of application:
**14.03.90 Bulletin 90/11**

(45) Publication of the grant of the patent:
**12.01.94 Bulletin 94/02**

(84) Designated Contracting States:
**AT BE CH DE ES FR GR IT LI LU NL SE**

(56) References cited:
**GB-A- 2 056 686**
**GB-A- 2 169 085**
**GB-A- 2 197 483**

(73) Proprietor: **ROKE MANOR RESEARCH LIMITED**

**Romsey, Hampshire, SO51 0ZN(GB)**

(72) Inventor: **Foster, Michael Roy**
**8 The Triangle**
**Whiteparish**
**Salisbury Wiltshire(GB)**

(74) Representative: **Fish, Norman Ernest et al**
**Siemens Group Services Limited,**
**Intellectual Property Department,**
**Roke Manor,**
**Old Salisbury Lane**
**Romsey, Hampshire SO51 0ZN (GB)**

EP 0 358 320 B1

Rank Xerox (UK) Business Services
(3.10/3.9/3.3.3)

**Description**

The present invention relates to a method of detecting direction of rotation and the number of revolutions of a rotating part.

Vehicle navigation systems frequently require an odometer or rotation sensor to be fitted to one or more wheels, or to the tracks of tracked vehicles. Many other requirements are found for the sensing of one or more rotating parts of machinery. Such sensors are relatively costly to install and maintain, and are susceptible to mechanical damage from wear and/or the presence of mud and stones.

Electronic speed and distance sensors fitted to vehicles are generally installed either in close proximity to a wheel, propellor shaft or other rotating part of the vehicle, or by means of an in-line installation in a speedometer cable. Techniques used include optical encoding and magnetic sensors using for instance, a small rotating magnet and fixed Hall Effect sensors.

Sensors frequently involve making mechanical alterations to a vehicle such as cutting into a speedometer cable, or fitting magnets in association with the sensors in close proximity on the wheel hub assemblies or propellor shafts. Skilled personnel are frequently required to fit such sensors, and replacement or maintenance of standard vehicle parts such as brake drums, speedometer cables or wheel bearings commonly cause damage to the devices.

Where two separate measurements are required, such as the determination of the speed or distance travelled by both tracks of a tracked vehicle or two independent wheels of a wheeled vehicle, then two independent sensors need to be fitted. Commonly a third sensor or set of sensors is added to the vehicle to enable the magnetic heading of the vehicle to be determined.

Further drawbacks of the traditional systems result from the need for electrical connections to be made to the sensors, often requiring cables to be passed from outside to inside the vehicle. Again these require skilled fitting, together with waterproof seals and protection of cables from mechanical damage. Where cables are fitted to existing vehicles extensive work can be involved in removing and replacing trim panels while installing such cables.

Sensors relying on inductive techniques have the further disadvantage that a signal is only obtained at speeds in excess of a lower limit. Any movement at lesser speeds is not recorded.

Examples of prior art systems are shown in patent specifications GB 2197483 and GB 2169085 and both use a permanent magnet attached to a rotating shaft and sensors positioned substantially perpendicular to the rotating shaft. The sensors recognise magnetic field changes by the relative movement of the magnet and the sensors. To achieve the desired result, the sensors have to be precisely aligned and it is necessary to have the presence of the permanent magnet.

The above structural limitations are not applicable to the invention as described in the present application.

The present invention offers a solution to these problems by remote fitting of the sensor, removing the necessity of the sensor being fitted in relatively close proximity to a rotating component, removing at the same time any requirement for technically skilled personnel in its fitting. Such a sensor may operate magnetically through a steel panel or other structure in the vehicle.

According to the present invention there is provided a method of detecting direction of rotation, and the number of revolutions of a rotating part which generates a magnetic field locus as it rotates, the method comprising the steps of:

(i) setting up a sensor arranged to detect the magnetic field in two orthogonal axes (X, Y) adjacent the rotating part,

(ii) converting an output signal indicative of the magnetic field, generated from each axis into a digital signal, and feeding the digital signal into a processor,

(iii) causing the processor to scan for maximum and minimum of X and Y magnetic field values in real time and to record a sequence of four maximum and minimum values,

(iv) detecting which of the two sequences X maximum, Y maximum, X minimum, Y minimum or X maximum, Y minimum, X minimum, Y maximum is taking place,

(v) producing a single value which is a maximum or minimum value or a combined sum of the maximum and minimum values in each recorded sequence,

(vi) calculating for each single value, the change between the present value and the last value, present value and next to last value, present value and third to last value, and storing the results as three first sets of differences (D1, D2 and D3),

(vii) calculating for each value in the first sets of differences, the difference between it and the previous value in the same set and storing the results as three second sets of differences (DD1, DD2 and DD3),

(viii) calculating for each value of the second set of differences, the difference between it and the previous value in the same set and storing the results as three third sets of differences (DDD1, DDD2 and DDD3),

(ix) identifying which of the aforementioned third sets of differences has values consistently closer to zero, thereby determining the number of subsidiary magnetic loops in the locus and generating an output signal indicative of the complete revolution each time a number of sequences of maximum and minimum values determined by the number of subsidiary loops has been detected.

It will be appreciated that the present rotation sensor could be part of a navigation system.

An embodiment of the present invention will now be described by way of example only with reference to the accompanying drawings in which:-

Figure 1 is a schematic illustration of a typical magnetic sensor arrangement for the determination of wheel rotation including a magnetometer.

Figure 2 illustrates, in graphical form, a trace of the magnetic field in x and y axes as detected by the magnetometer illustrated in Figure 1.

Figure 3 illustrates, in graphical form the filtered output from a filter illustrated in Figure 1;

Figure 4 illustrates the variation in the magnetic field detected along the x axis as detected by the magnetometer of Figure 1 against the distance travelled for single and two rotating part applications;

Figure 5 illustrates a typical output magnetic locus for a rotation sensor according to the present invention having zero subsidiary magnetic loops;

Figure 6 illustrates a typical output magnetic locus for a rotation sensor according to the present invention having one subsidiary magnetic loop; and,

Figure 7 illustrates a typical output magnetic locus for a rotation sensor according to the present invention having two subsidiary magnetic loops.

In previous wheel rotation sensors several detectors arranged to sense the magnetic field in a multiple of axes or poles have been used. The detectors sense changes in the magnetic field "envelope" associated with the rotating part as it rotates.

An electronic or magnetic compass is constructed with a magnetometer system comprising magnetic sensors arranged to detect magnetic fields in orthogonal axes. The magnetic compass is calibrated by noting the "ambient" magnetic field values at all points or bearings of the compass ie. 360°. Thus, with the magnetic compass fixed and the magnetic field sensed by the orthogonally acting sensors, a direction reading can be determined by comparison with the calibrated values.

To enhance the magnetic field and any changes therein additional magnets, magnetic strips or pieces of magnetically inductive material, such as steel, may be added to the rotating part. Furthermore, the rotating part could be deliberately magnetised.

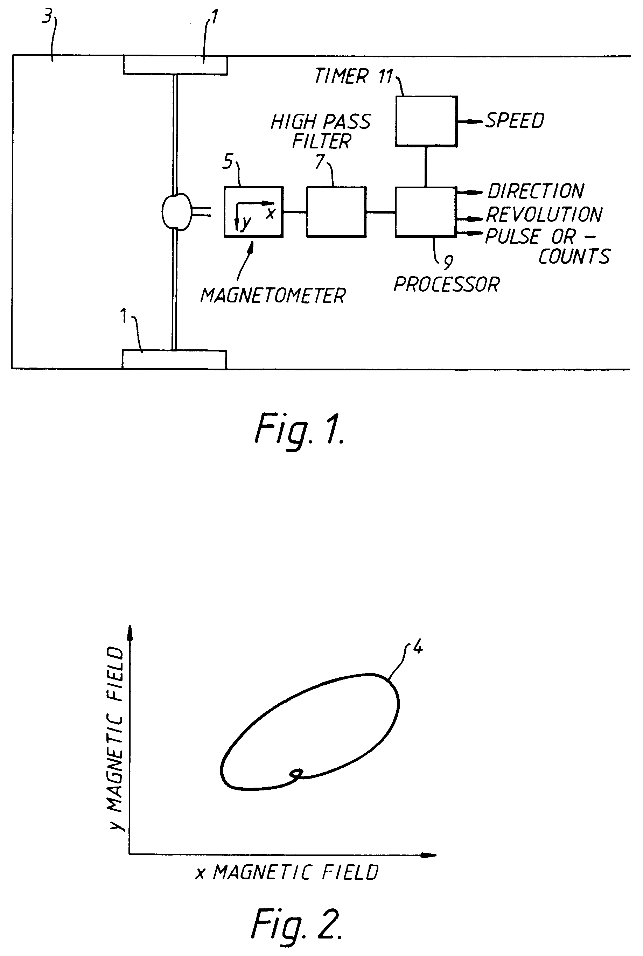

Consider Figure 1, which shows a typical configuration of a sensor arrangement according to an embodiment of the present invention in proximity to the rear wheels 1 of a vehicle 3. A magnetometer 5 is arranged to detect the magnetic field in orthogonal axes x-y about a rotating part such as a propeller shaft coupled to the wheels 1. The detected magnetic field values are fed to a high pass filter 7 in order to remove any electronic noise etc. Signals from the high pass filter 7 are fed to a processor 9 which can be arranged to give, for example, output signals indicative of direction of the rotating part revolution in a prescribed time period in order to determine a speed valuation.

The magnetometer 5 outputs typically a magnetic field locus 4, as illustrated in Figure 2, for each rotation of the wheels 1. As the vehicle heading changes the locus 4 is displaced across the x-y plane but retains its characteristic shape. It will be noted that a third axis z can also be detected and utilised within the scope of the present invention.

The processor 9 is arranged to sample the signals from the filter 7 and have a trigger threshold requirement. By this sample process the rotation sensor is made immune to magnetic noise in the environment and to changes in the direction heading of the vehicle 3. The rotation sensor is thus disabled and waits for signals above the trigger threshold when the vehicle 3 is stationary.

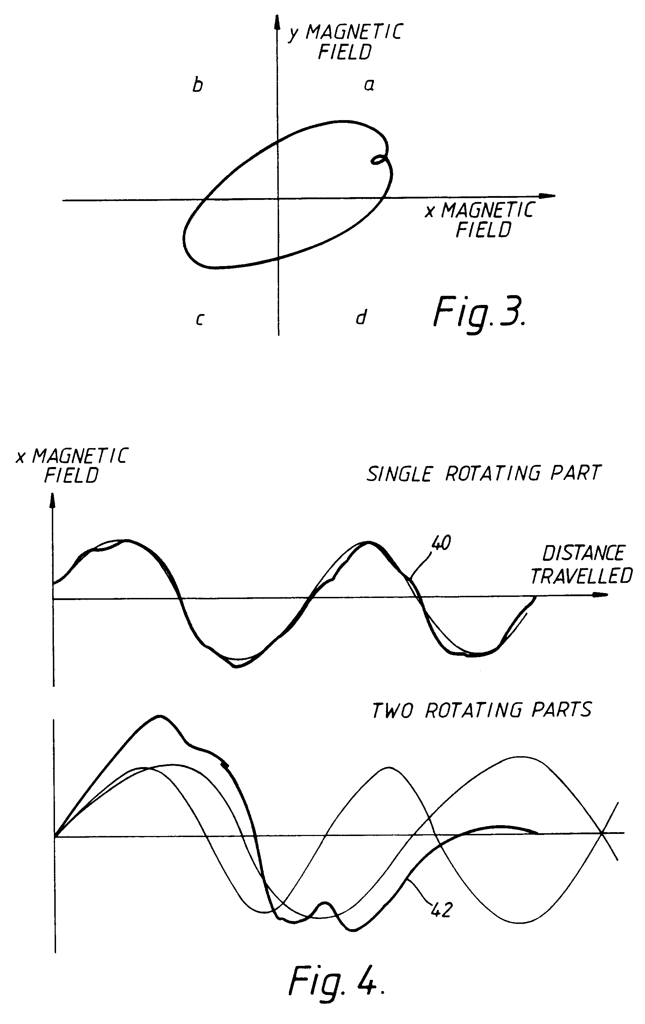

The signals from the high pass filter 7 typically take the form shown in Figure 3, in which the locus 4 has been centred at the origin of an x-y co-ordinate frame 12.

A preferred method of processing the x-y values of the magnetic field from the filter 7 takes no account of the actual shape of the locus 4, thus allowing for changes in ambient background magnetic field values due to vehicle heading changes, whilst at the same time imposing a greatly reduced processing load on the processor 9.

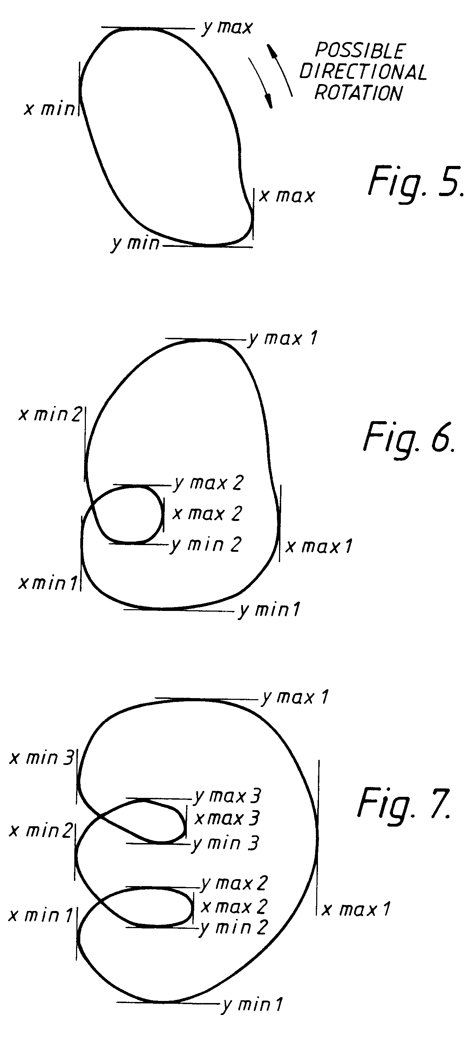

Values of the maxima and minima of the x and y magnetic field output from the filter 7 are recorded, together with their sequence of occurrence. Three typical wheel magnetic signatures are shown in figures 5, 6 and 7, having respectively no subsidiary magnetic loops, one loop and two loops. Any number of such subsidiary magnetic loops may occur, but the number is generally not greater than 3 provided that the magnetometer sensor 5 is not placed too close to the rotating part. It will be appreciated that it is desirable to be able to detect precisely the same point on each wheel revolution, so that the signal passed to any compass calibration process does not suffer from a variable magnetic field contribution from the rotating wheel 1, and this is the objective of this method.

The maxima and minima of the x and y magnetic field are conveniently stored in sets of four. Each set contains a value for each of x and y maximum and minimum starting at a defined point in a signature (e.g. at x maximum). By establishing that the magnetic locus proceeds in one of the two possible sequences, the direction of rotation can be determined. Two sequences are:

maximum x
maximum y
minimum x
minimum y
or
maximum x
minimum y
minimum x
maximum y

Consider Figure 5, it can be seen that no other sequence should be obtained for a simple closed loop magnetic signature as a wheel rotates once, except for the special case where an x maximum or minimum coincides with a y maximum or minimum. This case can be simply incorporated into the processor 9.

The number of such sets of x and y maximum and minimum values obtained per wheel revolution will depend on how many subsidiary magnetic loops exist in the magnetic locus, being one for a simple locus (figure 5), two for the case of one subsidiary loop (figure 6) and three for the case of two subsidiary loops (figure 7) for the three examples considered above, however a higher number is theoretically possible.

In a first simple form of rotation sensor processor 9, the difference is taken between, say, maximum x values only, a comparison being made between the differences between three cases: every third such value, alternate values and adjacent values. It will be appreciated that in the event of there being two subsidiary magnetic loops, then the third difference will have the lowest value, in the case of one subsidiary loop then the second difference will have the lowest value and in the case of no subsidiary loops then the three differences will all have roughly the same value (allowing for the presence of some noise). The number of subsidiary loops can therefore be determined from the measurements, and a wheel revolution ascribed to a convenient point in every cycle (for instance the first positive difference following one or more negative differences).

A more complex rotating sensor processor 9 could use the above difference values independently for any combination of up to four of the four recorded values, or for any combination of the enlarged set of eight recorded values obtained if a simultaneous y reading is taken each time x maximum or minimum is recorded and a simultaneous x reading taken each time y maximum or minimum is recorded.

Even in the presence of noise the above schemes can be made to give a reliable output by looking for the largest number of up to eight independent assessments of the wheel rotation. While this works well in practice, a better scheme is one which reduces the overall processing requirement, and such a scheme will now be described.

Instead of tracing differences between individual maxima and minima the sum of the differences for the entire set can conveniently be used, this sum either allowing for the sign of each independent difference or not. It is most convenient to form the sum of the four maximum and minimum values in each set (or eight values if the corresponding x and y values are also used). The third, alternate and adjacent differences are then formed, as above, and the same processing used. By this means noise immunity is gained and processor load reduced.

Sample data are shown in table 1, where column RECSUM shows a set of successive sums of the x maximum, y maximum, x minimum and y minimum values by way of an example. Column D1 shows the difference between adjacent values in column RECSUM, column D2 shows the difference between alternate values in column RECSUM and column D3 shows the difference between every third value in column RECSUM. Even in the presence of noise the value in column D2 is reliably smaller than that in columns D1 and D3, showing that one subsidiary magnetic loop is present. The output magnetometer data to be used should therefore be selected as alternate values of, for instance, x maximum and its corresponding y value.

Further noise immunity can be gained by using an output point which is not actually on the magnetic locus, but which is reliably related to it. An example of such a point is the point x maximum, y maximum, other such points being x maximum, y minimum; x minimum, y maximum and x minimum, y minimum. By using one of these points for the location/navigation calculations, the noise immunity implicit in the peak detection process is gained and more importantly the rate at which samples need to be taken can be greatly reduced, since the detection of both x and y values is being carried out on the relatively level peak of a sine wave. This latter point further reduces the processor load.

The above processes all give reliable outputs while the vehicle is moving in a straight line, but when the heading of the vehicle is changing they can lead to false additional outputs or suppressed outputs. A further feature of the present invention is the ability to continue to operate even when the magnetic field changes due to vehicle heading changes are much larger than those from the wheel magnetic field signature changes. The input for this process is the set of differences obtained above, that is the third, alternate and adjacent differences between individual or summed sets of x and y maximum and minimum values and their associated simultaneous y or x values respectively.

Consider as an example the calculated values of the third differences. The difference is now calculated between every value and the previous value. It will be observed that the new differences will be more immune to external magnetic influence from changes in vehicle heading. If required a second set of such differences can be obtained, being the differences between the differences themselves, and this last set of values will again have the same sign and greater immunity to magnetic influence. This process can be repeated as many times as required until a reliable signal is obtained when the vehicle is turning on full lock. In practice three such sets of differences are generally sufficient to provide satisfactory performance.

The process described above considers only the third differences, however the same process can be applied to the alternate differences to give a second such set of differences, or to the adjacent differences to give a third such set. Taking the same successive difference in each case, the same comparison is made as originally to determine whether two, one or no subsidiary magnetic loops are present. The resulting output then works correctly for any turn rate of the vehicle from full lock to movement in a straight line. An example of the calculated values for a vehicle turning in a tight circle is given in table 2. It can be seen that the original comparison of columns D1, D2 and D3 no longer gives a reliable indication of the number of subsidiary magnetic loops, but that the second difference values in columns DD1, DD2 and DD3 reliably give such an indication. allowing the correct output values to be made once per wheel revolution.

In practice it is necessary only to hold sufficient of the table described above to enable the due differences to be calculated. The output is then derived in real time, but displaced backwards to an earlier revolution of the wheel, the precise revolution depending on the number of such differences taken.

Table 1

| Sample data for a vehicle moving in a straight line | | | |
|---|---|---|---|
| RECSUM | D1 | D2 | D3 |
| 3000 | | | |
| 3088 | 88 | | |
| 2972 | -116 | -28 | |
| 3071 | 99 | -17 | 71 |
| 2969 | -103 | -3 | -119 |
| 3086 | 117 | 15 | 114 |
| 3000 | -86 | 31 | -71 |
| 3095 | 95 | 9 | 126 |
| 2992 | -103 | -8 | -94 |
| 3071 | 79 | -24 | 71 |
| 2974 | -97 | -18 | -121 |
| 3077 | 103 | 6 | 85 |
| 2984 | -93 | 10 | -87 |
| 3102 | 118 | 25 | 128 |
| 3043 | -59 | -59 | -34 |
| 3124 | 81 | 22 | 140 |
| 3040 | -84 | -3 | -62 |
| 3114 | 74 | -10 | 71 |
| 3037 | -77 | -3 | -87 |
| 3109 | 72 | -5 | 69 |
| 3033 | -76 | -4 | -81 |
| 3114 | 81 | 5 | 77 |
| 3021 | -93 | -12 | -88 |
| 3100 | 79 | -14 | 67 |
| 3010 | -90 | -11 | -104 |
| 3097 | 87 | -3 | 76 |
| 2996 | -101 | -14 | -104 |
| 3130 | 134 | 33 | 120 |

Table 2.  Sample data for a vehicle moving in a circle

| RECSUM | D1 | D2 | D3 | DD1 | DD2 | DD3 | DDD1 | DDD2 | DDD3 |
|---|---|---|---|---|---|---|---|---|---|
| 3000 | | | | | | | | | |
| 2735 | -265 | | | | | | | | |
| 2279 | -456 | -721 | | -191 | | | | | |
| 2159 | -120 | -576 | -841 | 336 | 145 | | 527 | | |
| 1881 | -278 | -398 | -854 | -158 | 178 | -13 | -494 | 33 | |
| 1826 | -55 | -333 | -453 | 223 | 65 | 401 | 381 | -113 | 414 |
| 1658 | -168 | -223 | -501 | -113 | 110 | -48 | -336 | 45 | -449 |
| 1789 | 131 | -37 | -92 | 299 | 186 | 409 | 412 | 76 | 457 |
| 1864 | 75 | 206 | 38 | -56 | 243 | 130 | -355 | 57 | -279 |
| 2233 | 369 | 444 | 575 | 294 | 238 | 537 | 350 | -5 | 407 |
| 2554 | 321 | 690 | 765 | -48 | 246 | 190 | -342 | 8 | -347 |
| 2934 | 380 | 701 | 1070 | 59 | 11 | 305 | 107 | -235 | 115 |
| 3255 | 321 | 701 | 1022 | -59 | 0 | -48 | -118 | -11 | -353 |
| 3709 | 454 | 775 | 1155 | 133 | 74 | 133 | 192 | 74 | 181 |
| 3944 | 235 | 689 | 1010 | -219 | -86 | -145 | -352 | -160 | -278 |
| 4117 | 173 | 408 | 862 | -62 | -281 | -148 | 157 | -195 | -3 |
| 4023 | -94 | 79 | 314 | -267 | -329 | -548 | -205 | -48 | -400 |
| 4109 | 86 | -8 | 165 | 180 | -87 | -149 | 447 | 242 | 399 |
| 3878 | -231 | -145 | -239 | -317 | -137 | -404 | -497 | -50 | -255 |
| 3782 | -96 | -327 | -241 | 135 | -182 | -2 | 452 | -45 | 402 |
| 3365 | -417 | -513 | -744 | -321 | -186 | -503 | -456 | -4 | -501 |

| | | | | | | | | | |
|---|---|---|---|---|---|---|---|---|---|
| 3117 | -248 | -665 | -761 | 169 | -152 | -17 | 490 | 34 | 486 |
| 2597 | -520 | -768 | -1185 | -272 | -103 | -424 | -441 | 49 | -407 |
| 2424 | -173 | -693 | -941 | 347 | 75 | 244 | 619 | 178 | 668 |
| 2054 | -370 | -543 | -1063 | -197 | 150 | -122 | -544 | 75 | -366 |
| 1988 | -66 | -436 | -609 | 304 | 107 | 454 | -501 | -43 | 576 |
| 1735 | -253 | -319 | -689 | -187 | 117 | -80 | -491 | 10 | -534 |
| 1744 | 9 | -244 | -310 | 262 | 75 | 379 | 449 | -42 | 459 |
| 1710 | -34 | -25 | -278 | -43 | 219 | 32 | -305 | 144 | -347 |
| 1939 | 229 | 195 | 204 | 263 | 220 | 482 | 306 | 1 | 450 |
| 2191 | 252 | 481 | 447 | 23 | 286 | 243 | -240 | 66 | -239 |
| 2588 | 397 | 649 | 878 | 145 | 168 | 431 | 122 | -118 | 188 |
| 2877 | 289 | 686 | 938 | -108 | 37 | 60 | -253 | -131 | -371 |
| 3282 | 405 | 694 | 1091 | 116 | 8 | 153 | 224 | -29 | 93 |
| 3649 | 367 | 772 | 1061 | -38 | 78 | -30 | -154 | 70 | -183 |
| 4022 | 373 | 740 | 1145 | 6 | -32 | 84 | 44 | -110 | 114 |
| 4027 | 5 | 378 | 745 | -368 | -362 | -400 | -374 | -330 | -484 |
| 4149 | 122 | 127 | 500 | 117 | -251 | -245 | 485 | 111 | 155 |
| 3996 | -153 | -31 | -26 | -275 | -158 | -526 | -392 | 93 | -281 |
| 4001 | 5 | -148 | -26 | 158 | -117 | 0 | 433 | 41 | 526 |
| 3680 | -321 | -316 | -469 | -326 | -168 | -443 | -484 | -51 | -443 |

It will be appreciated that accuracy and sensitivity of the present rotation sensor may under some conditions be improved by combining magnetic field values detected in different orthogonal axes i.e. x + y, x-y etc. The processor 9 may be set up to select the most useful combinations of x-y magnetic field values for improved sensor accuracy during calibration of the sensor or an associated magnetic compass.

Where two rotations are required to be measured Fourier analysis is carried out between the stages indicated by Figures 2 and 3 i.e. centring of the trace. The signal of each sensor at this point takes the forms shown in Figure 4 for single and two rotating parts respectively i.e. single part trace 40 and two rotating parts trace 42.

The Fourier analysis module carries out a separation of the two sinusoidal signal components, so that the processor can independently determine the rotation of each of the two rotating parts. In order for the processor 9 to assign the correct signal to each rotating part it is convenient to deliberately cause the sensor to be offset slightly towards one of the two rotating parts, so that the nearer one gives a stronger signal. Intervention to identify which signal should be associated with which rotating part can then be avoided. It is usually sufficient to offset the sensor by only a small fraction of the distance between the two parts, for instance 10%.

The provision of a speed or rotation sensor for one or two rotating wheels has been made in a non-contacting sensor which can be fitted at a distance from the rotating part in question. The sensor used is a standard magnetometer having one, two or three sensing axes. The sensor can be used at the same time to determine vehicle heading if required, and one or two rotation rates. For dead reckoning vehicle location or navigation systems this simplifies the system configuration immensely, since the magnetometers are required in any case for heading sensing.

By utilising only a single sensor the need for cabling is minimised. The sensor will operate through a steel panel or structure, or through any non-magnetic material, so that it can be fitted either internally or externally as required. Due to the dynamic range of the device the need for close proximity to the rotating part is avoided, and the only requirement is that the rotating part rotation to be sensed gives a stronger magnetic signal than other rotating parts. This is generally achieved merely by ensuring that the sensor is closer to the rotating part whose rotation is to be sensed than to other rotating parts.

An additional feature is that a measure of rejection of unwanted rotation signals can be achieved. This is particularly useful, for instance, in sensing the rotation rates of the two rear wheels of a car. Suitable positioning will allow the sensors to reject the unwanted rotations of the propellor shaft and differential, and measure the rotation of the two rear road wheels.

The invention uses a magnetometer together with filters and processing means to adapt to the natural magnetic signal of rotating parts and to follow the movement of these. The operation is entirely magnetic, and is not affected by the stopping of motion, even for extended periods. An output signal is given each time the rotating part passes an identified point, and can be made to indicate the direction of rotation as well.

Rotating steel parts will usually have sufficient magnetism to enable the system to work immediately on installation, but where this is not the case a simple momentary non-critical application of a magnet or magnetic coil will provide sufficient permanent magnetisation for all future needs. Non-magnetic components can be provided with a magnet, magnetic strip or piece of steel to give a very simple and non-critical fitting procedure.

It will be appreciated that the rotation sensor of the present invention is suitable for use in remote environments where access may be difficult i.e. nuclear power plant etc.

The rotation sensor of the present invention may be incorporated into a navigation system for a vehicle wherein the rotation sensor is used in conjunction with a wheel or similar of known perimeter. Consequently, distance travelled can be determined in a particular bearing direction and by a dead reckoning technique the location of the vehicle established.

The rotation sensor could employ the same magnetic sensors as used in an electronic magnetic compass.

## Claims

1. A method of detecting direction of rotation, and the number of revolutions of a rotating part (1) which generates a magnetic field locus as it rotates, the method comprising the steps of:

   (i) setting up a sensor arranged to detect the magnetic field in two orthogonal axes (X, Y) adjacent the rotating part,

   (ii) converting an output signal indicative of the magnetic field, generated from each axis into a digital signal, and feeding the digital signal into a processor,

   (iii) causing the processor to scan for maximum and minimum of X and Y magnetic field values in real time and to record a sequence of four maximum and minimum values,

   (iv) detecting which of the two sequences X maximum, Y maximum, X minimum, Y minimum or X maximum, Y minimum, X minimum, Y maximum is taking place,

   (v) producing a single value which is a maximum or minimum value or a combined sum of the maximum and minimum values in each recorded sequence,

   (vi) calculating for each single value, the change between the present value and the last value, present value and next to last value, present value and third to last value, and storing the results as three first sets of differences (D1, D2 and D3),

   (vii) calculating for each value in the first sets of differences the difference between it and the previous value in the same set and storing the results as three second sets of differences (DD1, DD2 and DD3),

   (viii) calculating for each value of the second set of differences, the difference between it and the previous value in the same set and storing the results as three third sets of differences (DDD1, DDD2 and DDD3),

   (ix) identifying which of the aforementioned third sets of differences has values consistently closer to zero, thereby determining the number of subsidiary magnetic loops in the locus and generating an output signal indicative of the complete revolution each time a number of sequences of maximum and minimum values determined by the number of subsidiary loops has been detected.

2. A method as claimed in claim 1, wherein subsequent to step (viii) higher sets of differences are determined.

3. A method as claimed in claim 1 or claim 2, wherein in step (iii) for each x maximum and x minimum value the associated y value is recorded and for each y maximum and y minimum value the associated x value is recorded and in step (v) the associated y or x values may also be used for producing the single value.

**Patentansprüche**

1. Verfahren zur Erfassung der Drehrichtung und der Anzahl Umdrehungen eines Rotationsteiles (1), weiches während seiner Umdrehung ein zentriertes Magnetfeld erzeugt, gekennzeichnet durch folgende Schritte:

   (i) Einrichten eines Sensors zur Erfassung des Magnetfeldes in zwei zum Rotationsteil benachbarten orthogonalen Achsen (X,Y),

   (ii) Umwandlung eines das Magnetfeld anzeigenden Ausgangssignales, welches von jeder Achse erzeugt worden ist, in ein digitales Signal, und Zuführen des digitalen Signales in einen Prozessor,

   (iii) Betreiben des Prozessors derart, dass das Maximum und Minimum der X- und Y- Magnetfeldwerte in Echtzeit abgefragt werden und eine Sequenz von vier Maximal- und Minimalwerten aufgenommen werden,

   (iv) Ermittlung, welche der beiden Sequenzen X-Maximum, Y-Maximum, X-Minimum, Y-Minimum oder X-Maximum, Y-Minimum, X-Minimum, Y-Maximum stattfindet,

   (v) Erzeugung eines Einzelwertes, welcher einen Maximal- oder Minimalwert oder eine kombinierte Summe der Maximal- und Minimalwerte jeder aufgenommenen Sequenz darstellt,

   (vi) Berechnung für jeden Einzelwert der Aenderung zwischen dem jetzigen Wert und dem letzten Wert, dem jetzigen Wert und dem vorletzten Wert, dem jetzigen Wert und dem drittletzten Wert und Speicherung der Ergebnisse als drei erste Differenzsätze (D1,D2,D3),

   (ii) Berechnung für jeden Wert in den ersten Differenzsätzen der Differenz zwischen sich und dem vorgehenden Wert des selben Satzes und Speicherung der Resultate als drei zweite Differenzsätze (DD1, DD2, DD3),

   (viii) Berechnung für jeden Wert des zweiten Differenzsatzes der Differenz zwischen sich und dem vorhergehenden Wert des selben Satzes und Speicherung der Resultate als drei dritte Differenzsätze (DDD1, DDD2, DDD3),

   (ix) Bestimmung, welcher der vorgängig erwähnten dritten Differenzsätze Werte aufweist, welche im Vergleich näher bei Null liegen, dadurch die Anzahl der subsidiaren Magnetfelder am Ort bestimmend und Ezeugung eines Ausgangssignals, welches jedesmal, wenn eine Anzahl von Sequenzen von Maximal- und Minimalwerten, bestimmt durch die Anzahl von subsidiaren Feldern, erkannt worden sind, eine vollständig abgeschlossene Umdrehung anzeigt.

2. Verfahren nach Anspruch 1, dadurch gekennzeichnet, dass nachfolgend an Schritt (viii) höhere Differenzsätze bestimmt werden.

3. Verfahren nach Anspruch 1 oder 2, bei welchem in Schritt (iii) für jeden X-Maximal- und X-Minimalwert der zugehörige Y-Wert aufgenommen wird und für jeden Y-Maximal- und Y-Minimalwert der zugehörige X-Wert aufgenommen wird und in Schritt (v) die zugehörigen Y- und X-Werte ebenfalls zur Erzeugung des Einzelwertes verwendet werden können.

**Revendications**

1. Procédé de détection du sens de rotation et du nombre de tours d'une partie rotative (1) qui crée un lieu de champ magnétique lors de sa rotation, le procédé comprenant les étapes suivantes :

   (i) le montage d'un capteur destiné à détecter le champ magnétique suivant deux axes orthogonaux (X, Y) près de la partie rotative,

   (ii) la conversion d'un signal de sortie représentatif du champ magnétique, créé pour chaque axe, en un signal numérique, et la transmission du signal numérique à un processeur,

   (iii) le balayage par le processeur des valeurs maximales et minimales du champ magnétique X et Y en temps réel et l'enregistrement d'une séquence de quatre valeurs maximales et minimales,

   (iv) la détection de celle des deux séquences valeur maximale X, valeur maximale Y, valeur minimale X, valeur minimale Y ou valeur maximale X, valeur minimale Y, valeur minimale X, valeur maximale Y qui est obtenue,

(v) la production d'une valeur unique qui est une valeur maximale ou minimale ou une somme de valeurs maximales et minimales à chaque séquence enregistrée,

(vi) le calcul, pour chaque valeur, du changement entre la valeur actuelle et la dernière valeur, la valeur actuelle et l'avant-dernière valeur, la valeur actuelle et l'antépénultième valeur, et la conservation des résultats sous forme de trois jeux de différences (D1, D2 et D3),

(vii) le calcul, pour chaque valeur, dans les premiers jeux de différences, de la différence entre la valeur et la valeur précédente dans le même jeu et la mémorisation des résultats sous forme de trois seconds jeux de différences (DD1, DD2 et DD3),

(viii) le calcul, pour chaque valeur du second jeu de différences, de la différence entre la valeur et la valeur précédente du même jeu et la mémorisation des résultats sous forme de troisièmes jeux de différences (DDD1, DDD2 et DDD3), et

(ix) l'identification de celui des trois jeux précités de différences qui a des valeurs plus proches de zéro de manière reproductible, avec détermination de cette manière du nombre de boucles magnétiques auxiliaires dans le lieu et création d'un signal de sortie représentatif d'une rotation complète chaque fois qu'un nombre de séquences de valeurs maximales et minimales déterminées par le nombre de boucles auxiliaires a été détecté.

2. Procédé selon la revendication 1, dans lequel, après l'étape (viii), des jeux plus importants de différences sont déterminés.

3. Procédé selon la revendication 1 ou 2, dans lequel, au cours de l'étape (iii), pour chaque valeur maximale x et minimale x, la valeur y associée est enregistrée et, pour chaque valeur maximale y et minimale y, la valeur x associée est enregistrée, et, au pas (v), les valeurs associées y ou x peuvent aussi être utilisées pour la production de la valeur unique.

Fig. 1.

Fig. 2.

Fig. 3.

Fig. 4.

y max

POSSIBLE
DIRECTIONAL
ROTATION

x min

x max

y min

*Fig. 5.*

y max 1

x min 2

*Fig. 6.*

y max 2
x max 2

y min 2

x max 1

x min 1

y min 1

y max 1

x min 3

*Fig. 7.*

y max 3
x max 3
y min 3

x min 2

y max 2
x max 2
y min 2

x min 1

x max 1

y min 1

14